# EUROPEAN PATENT APPLICATION

(11) **EP 3 932 725 A1**
(43) Date of publication of application: **05.01.2022**
(21) Application number: 20183773.9
(22) Date of filing: 02.07.2020
(51) Int. Cl.: B60L 7/14

(54) **HYBRID ENERGY STORAGE FOR HIGH POWER AND ENERGY DEMANDING MINING AND RAILWAY VEHICLES**

(71) Applicant: Siemens Aktiengesellschaft, 80333 München (DE); Siemens Mobility GmbH, 81739 München (DE)
(72) Inventor: Vladykin, Alexey, 90480 Nürnberg (DE); Köhler, Marco, 91233 Neunkirchen a. Sand (DE)

(57) **Abstract**

The present invention relates to a drive system (1) for a vehicle (2), particularly for a mining truck (3) or a rail vehicle (4), comprising
- an inverter (11) and a motor (12)
- a DC link (13) configured to be supplied with a voltage between 1500V and 3300V during operation of the drive system (1)
- a first DC/DC chopper (21) connecting a battery (31) with the DC link (13).

To improve the drive system it is proposed, that the drive system (1) further comprises a second DC/DC chopper (22) connecting an energy storage (32) with the DC link (13), wherein the energy storage comprises a double layer capacitor, wherein the drive system (1) is implemented brake-resistor-free.

The present invention further relates to a mining truck (3) or a rail vehicle (4) with the proposed drive system (1). Additionally the invention relates to a method for controlling the proposed drive system (1), the proposed Mining truck (3) or the proposed rail vehicle (4), wherein the maximum power of charging or discharging of the battery (31) is limited to a predetermined value.

## Description

The present invention relates to a drive system for a vehicle, comprising an inverter and a motor, a DC link configured to be supplied with a voltage between 1500V and 3300V during operation of the drive system and a first DC/DC chopper connecting a battery with the DC link. Further the invention relates to a mining truck and a rail vehicle comprising such a drive system. Furthermore, the present invention relates to method for controlling such a drive system, such a mining truck or such a rail vehicle.

Considering the realistic duty cycle of a vehicle with an energy storage on board it is important all operating points on tractive and braking characteristic to be considered. These are both partial and boundary points within the characteristics. The use of lithium-ion (or their analogies) batteries in this case is accompanied by their overheating and, accordingly, accelerated aging. Accelerated aging leads to the need for premature replacement of the entire energy storage unit during the lifetime of the vehicle, which significantly increases the total costs of ownership (TCO) of a vehicle.

High charge and discharge currents that lead to accelerated lithium-ion battery aging are eliminated by using energy storage devices with a higher total energy level, using a larger number of parallel-connected battery modules or packs. This value can be spitted between different amount of batteries, that are controlled with one or more DC/DC choppers. It depends on a vehicle and duty cycle.

On vehicles with place and weight limitations equipped with lithium-ion batteries, due to the low total energy level of the energy storage, the complete replacement occurs several times over the vehicle lifetime.

The objective of the present invention is to improve a drive system with energy storages for mining and railway vehicles.

This object is achieved according to the invention with the characterizing features of claim 1. Further this object is achieved according to the invention with the characterizing features of claim 4, claim 5 or claim 6.

Further advantageous embodiments of the invention are specified in the dependent claims.

Amongst others the invention is based on the finding that the drive system for a mining and railway vehicles can be improved by using a hybrid energy storage system. This system comprises besides a battery energy storage with a capacitor, particularly a double layer capacitor or a super cap.

Using a hybrid energy storage unit comprising not only of lithium-ion batteries, but also one or more Double layer capacitors, will allow the system to be designed without increasing the total energy level of the energy storage unit. It will limit the maximum charge and discharge currents of lithium-ion batteries by using double layer capacitors or super caps by smoothing out peak power values demanded by the motor of the drive system. This peak power may be caused by accelerating the drive system or braking the drive system by the motor. This will result in the absence or reduction of any stress effects during charge and discharge, decreasing temperature fluctuations, and therefore resulting to a sufficient energy storage lifetime, corresponding to the life time of the vehicle, or minimizing possible number of battery replacements during the life time of the vehicle, particularly a great and/or heavy vehicle.

This solution is particularly applicable for great vehicles. Great vehicles are defined by a drive system that comprises a DC link voltage in the range of 1500V and 3300V. In this kind of drive system neither the batteries nor the energy storage is coupled directly to the DC link. In this field of application, the batteries and the energy storage are connected respectively to the DC link by a DC/DC chopper. It is possible to adjust the voltage of the DC-link independently by choppers, separately controlling the battery unit and the energy storage, e.g. the super capacitor unit.

The power for charging or discharging the batteries can be influenced by controlling the electrical power that is exchanged by the energy storage via the second DC/DC chopper. The DC/DC chopper can advantageously in such a way be controlled, that the peak power of a current to or from the batteries is reduced. This reduces the stress of the batteries so that their lifetime increases.

Alternately or in addition a great or heavy vehicle, in particular a mining truck, may be defined as a vehicle with a payload more than 100t, more particular 150t.

Further the drive system does no longer need a brake resistor. Normally a brake resistor is implemented in order to make use of the motor to brake the vehicle, converting the energy into heat. This kind of braking is free from wear. In this application, the task of taking kinetic energy from the vehicle will be fulfilled by the energy storage with double layer capacitors or super caps. The rated power value of the double layer capacitor or super cap is typically as high, that the braking energy could easily be stored in this energy storage.

One advantage of the proposed drive system is the reduction of the total energy level of an energy storage by up to 1.4 times or even more, depending on the application and duty cycle. Further reducing the C-Rate level of the battery by 1.5 times to the maximum recommended for the battery, which allows significantly slowing down the aging of the battery and even eliminate battery replacement during the vehicle life time, or reduce the replacement amount to a small, especially minimum, number of times. In other words, maintenance costs may be reduced significantly. Furthermore, cost can be saved by eliminating the brake resistors and its control device and switching device by using double layer capacitors or super caps. Alternatively, the power of the brake resistor can be reduced significantly. Further, noise of the drive system can be reduced during electrodynamic braking, due to the absence of a fan blowing the brake resistors. So also, the number of auxiliary inverters or, more generally, the auxiliary power for cooling the brake resistors, can be reduced. In other words, the drive system becomes more efficient because electrical losses of the brake resistors can be avoided, and the braking energy can be used for the next acceleration sequence of the vehicle.

Although the hybrid energy storage has less energy storage capacity, the tasks of the drive system can be fulfilled, as described above, more efficient. The weight of the hybrid energy storage system is comparable or lower in comparison to a pure battery storage with brake resistor.

Also, in case, if only one type of energy storage can be used, for example if a DC/DC chopper fails, the vehicle is able to move by itself in an emergency operation mode with reduced performance. The redundancy of the drive system increases.

This leads to a reduction of battery utilization costs, due to the lower energy level that accounts for the battery part.

In an advantageous embodiment of the invention, the battery is a lithium ion battery. Lithium ion batteries have the capability to store a high amount of energy in relation to the volume or mass. So, this kind of battery is very attractive for great and/or heavy vehicles as a mining truck or a rail vehicle. On the other hand, this kind of battery is quite expensive. Measures to reduce the aging effect and reducing the content of the battery are very effective to create an economical drive system for a vehicle. So, the idea of the invention is particularly very advantageous for lithium ion batteries.

In a further advantageous embodiment of the invention, the energy storage is a combination of a lithium ion battery and a double layer capacitor. In this case, the properties of the energy storage can be adapted to the duty cycles of the vehicle. This kind of energy storage is also known as a super capacitor. Further, to increase the storage capacity, the energy storage can be optimized for storing kinetic energy, this means braking energy, of the vehicle. In combining the effects of the double layer capacitor and a battery, this storage can be designed regarding discharge/charge power and energy content independently. Advantageously the combination can be optimized for eliminating or reducing the brake resistor of the vehicle.

In a further advantageous embodiment of the invention, a state of charge of the energy storage is controlled below a first value, wherein the first value corresponds to an energy content of the energy storage, at which the kinetic energy of the vehicle, particularly of the proposed mining truck or of the proposed rail vehicle, may be transferred completely into the energy storage by the inverter and the motor. In order to eliminate the brake resistor, it should be ensured, that the kinetic energy, particularly reduced by losses of the drive system, can be transferred completely into the energy storage. In dependence of the speed and/or of the load of the vehicle the energy content of the energy storage, particularly of the super cap, has to be controlled below a predefined or calculated limit, to ensure that the amount of kinetic energy of the vehicle may be transferred into the energy storage. This method has the opportunity, that brake resistors and/or mechanical brakes may be removed from the design of the vehicle.

The invention is described and explained in more detail below based on advantageous embodiments of the invention. In the drawings:
- FIG 1: showing a proposed hybrid energy storage in a drive system for vehicles and
- FIG 2: showing a mining truck with the proposed drive system.

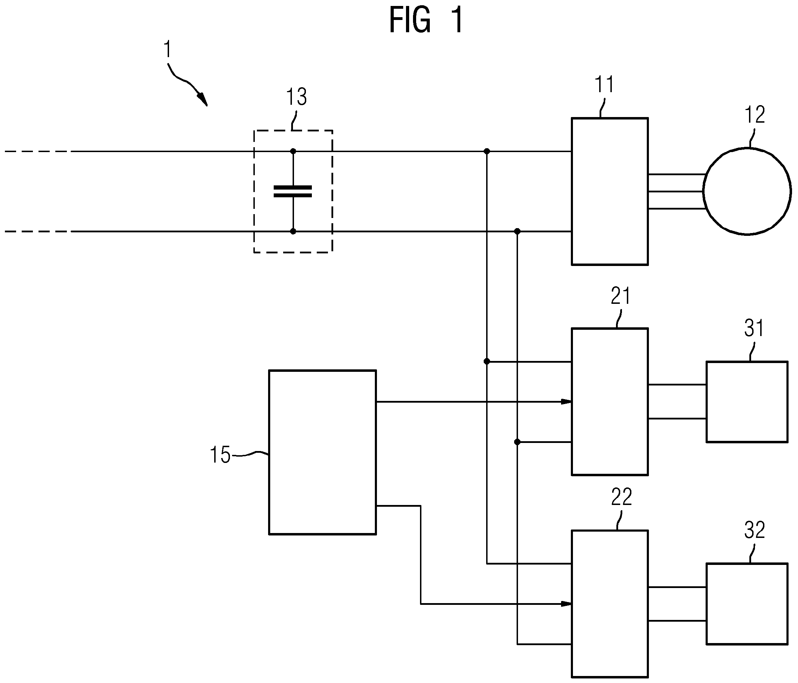

FIG 1 shows the drive system 1 of a vehicle 2. This drive system 1 comprises an inverter 11 to control a motor 12. The torque of the motor 12 may accelerate or brake the vehicle 2. Further the drive system 1 comprises a DC link 13. Further the drive system 1 comprises a battery 31, that is connected with the DC link via a first DC/DC chopper 21. In order to improve the drive system 1, the drive system 1 also comprises a further energy storage 32, that is coupled to the DC link 13 via a second DC/DC chopper 22. So, the exchange of electrical energy between the battery storage 31, the energy storage 32 and the motor 12 can be executed independently and controlled by a control unit 15.

Due to the stress of the energy storage during the duty cycles, this proposed hybrid energy storage is particularly advantageous for great vehicles 2. Great vehicles 2 may be defined by the voltage of the DC link 13, that is typically in the range of 1500V to 3300V. Such a combination of chemical and electrical energy storage device as an energy source will allow mining trucks 3 or rail-vehicles 4 with DC-link voltage controlled by choppers 21,22 to connect the advantages of batteries with high specific capacity, with the advantages of super capacitors with high specific power.

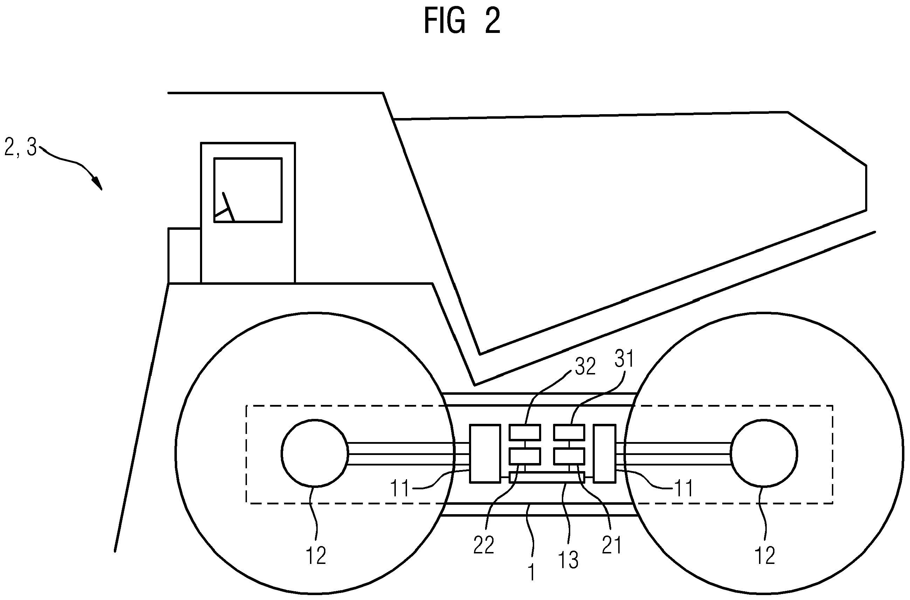

FIG 2 shows a vehicle 2, in this embodiment a great vehicle designed as a mining truck 3. The traction system of this mining truck 3 is the proposed drive system 1, comprising motors 12 at the wheels, supplied with electrical energy by the inverter 11, batteries 31 and energy storages 32, connected via a first and a second DC/DC chopper 21,22 to the DC link 13. The kinetic energy of the mining truck 3 may be stored in the energy storage 32. For this purpose the motor 12 changes into a regenerative braking mode and electrical energy flows from the motor 12 via the inverter 11 and the second DC/DC chopper 22 into the energy storage 32 with the capacitor, that is able to absorb the amount of electrical energy. This energy stored in the battery 31 and energy storage 32 may be used for the next acceleration of the mining truck 3.

Summarizing, the present invention relates to a drive system for a vehicle, particularly for a mining truck or a rail vehicle, comprising an inverter and a motor, a DC link configured to be supplied with a voltage between 1500V and 3300V during operation of the drive system, a first DC/DC chopper connecting a battery with the DC link. To improve the drive system it is proposed, that the drive system further comprises a second DC/DC chopper connecting an energy storage with the DC link, wherein the energy storage comprises a double layer capacitor, wherein the drive system is implemented brake-resistor-free. The present invention further relates to a mining truck or a rail vehicle with the proposed drive system. Additionally, the invention relates to a method for controlling the proposed drive system, the proposed Mining truck or the proposed rail vehicle, wherein the maximum power of charging or discharging of the battery is limited to a predetermined value.

## Claims

1. Drive system (1) for a vehicle (2), particularly for a mining truck (3) or a rail vehicle (4), comprising
- an inverter (11) and a motor (12)
- a DC link (13) configured to be supplied with a voltage between 1500V and 3300V during operation of the drive system (1)
- a first DC/DC chopper (21) connecting a battery (31) with the DC link (13)
- a second DC/DC chopper (22) connecting an energy storage (32) with the DC link (13), wherein the energy storage comprises a double layer capacitor,
wherein the drive system (1) is implemented brake-resistor-free.

2. Drive system (1) according to claim 1, wherein the battery (31) is a lithium ion battery.

3. Drive system (1) according to one of claim 1 or claim 2, wherein the energy storage (32) is a combination of a lithium ion battery and a double layer capacitor.

4. Mining truck (3) with a drive system (1) according to one of claims 1 to 3.

5. Rail vehicle (4) with a drive system (1) according to one of claims 1 to 3.

6. Method for controlling a drive system (1) according one of claims 1 to 3 or a Mining truck (3) according to claim 4 or a rail vehicle (4) according to claim 5, wherein the maximum power of charging or discharging of the battery (31) is limited to a predetermined value.

7. Method according claim 6, wherein a state of charge of the energy storage (32) is controlled below a first value, wherein the first value corresponds to an energy content of the energy storage (32), at which the kinetic energy of the vehicle (2), particularly of the mining truck (3) according claim 4 or of the rail vehicle (4) according claim 5, may be transferred completely into the energy storage (32) by the inverter (11) and the motor (12).
